# EUROPEAN PATENT SPECIFICATION

(11) **EP 4 024 252 B1**
(45) Date of publication and mention of the grant of the patent: **14.08.2024**
(21) Application number: 21217793.5
(22) Date of filing: 27.12.2021
(51) Int. Cl.: G06F 21/55, G06F 21/56, G06F 21/57, G06N 20/00

(54) **A SYSTEM AND METHOD FOR IDENTIFYING EXPLOITED CVES USING HONEYPOTS**
SYSTEM UND VERFAHREN ZUR IDENTIFIZIERUNG VON VERBRAUCHTEN CVES MITTELS HONEYPOTS
SYSTÈME ET PROCÉDÉ D'IDENTIFICATION DE VULNÉRABILITÉS ET D'EXPOSITIONS COMMUNES EXPLOITÉES À L'AIDE DE POTS DE MIEL

(30) Priority: 31.12.2020 IL 27989320
(43) Date of publication of application: 06.07.2022
(73) Proprietor: Deutsche Telekom AG, 53113 Bonn (DE)
(72) Inventor: Geller, Shay Alexander, 7551830 Lezion (IL); Shabtai, Asaf, 7684200 Hulda (IL); Elovici, Yuval, 7986400 Arugot (IL); Brodt, Oleg, 8471621 Beer Sheva (IL); Mimran, David, 6215505 Tel Aviv (IL)
(74) Representative: Meissner Bolte Partnerschaft mbB

(56) References cited:
- EP-A1- 3 336 739
- EP-A1- 3 340 567
- US-A1- 2020 374 298
- ABBASI ET AL: "Detection and classification of malicious network streams in honeynets", A THESIS PRESENTED IN PARTIAL FULFILMENT OF THE REQUIREMENTS FOR THE DEGREE OF DOCTOR OF PHILOSOPHY IN COMPUTER SCIENCE, 16 December 2013 (2013-12-16), Massey University, XP055864235, Retrieved from the Internet <URL:https://mro.massey.ac.nz/bitstream/handle/10179/4967/02_whole.pdf?sequence=2&isAllowed=y> [retrieved on 20211122]
- ARAUJO FREDERICO ET AL: "Engineering cyber-deceptive software", 31 August 2016 (2016-08-31), Ann Arbor, XP055921395, ISBN: 978-1-369-07941-8, Retrieved from the Internet <URL:https://personal.utdallas.edu/~hamlen/araujo16thesis.pdf> [retrieved on 20220516]
- NAVARRO JULIO ET AL: "HuMa: A Multi-layer Framework for Threat Analysis in a Heterogeneous Log Environment", 17 February 2018, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 144 - 159, ISBN: 978-3-540-74549-5, XP047464710
- SUN NAN ET AL: "Data-Driven Cybersecurity Incident Prediction: A Survey", IEEE COMMUNICATIONS SURVEYS & TUTORIALS, vol. 21, no. 2, 31 December 2018 (2018-12-31) - 31 December 2018 (2018-12-31), pages 1744 - 1772, XP011727915, DOI: 10.1109/COMST.2018.2885561

## Description

### Field of the Invention

The present invention relates to the field of cyber security. More particularly, the present invention relates to automatic computer-implemented system and method for identifying exploited CVEs, using honeypots.

### Background of the Invention

**Common Vulnerabilities** and **Exposures (CVE)** is a dictionary-type list of standardized names for vulnerabilities and other information related to security exposures. CVE aims to standardize the names for all publicly known vulnerabilities and security exposures. The goal of CVE is to make it easier to share data across separate vulnerable databases and security tools for handling cybersecurity problems and attacks (like viruses, malware, etc.). There is a need to standardize the way each known vulnerability or exposure is identified. Standard IDs allow security administrators to access technical information about a specific threat across multiple CVE-compatible information sources. Not all the CVEs are being exploited in the real world.

CVEs can be free publicly available on lots of websites, contributed by many security experts and organizations, and written in semi-structured form, almost always followed by MITRE CVE guidelines. MITRE is a not-for-profit organization that operates research and development centers sponsored by the U.S federal government.

"99% of the vulnerabilities exploited by the end of 2020 will continue to be ones known by security and IT professionals at the time of the incident" ( Gartner, Inc., Stamford, CT, U.S.A.).

These CVEs contain valuable information about most of the known vulnerabilities and are commonly used by security researchers\analysts to manually investigate suspicious activities. Not every vulnerability is a risk. If a CVE exists, it doesn't mean is already exploited in the real world - It has the potential to be exploited.

A Honeypot is a network-attached system (a computer security mechanism) set up as a decoy to lure cyber-attackers and to detect, deflect or study hacking attempts to gain unauthorized access to information systems. The function of a honeypot is to represent itself on the internet as a potential target for attackers (usually a server or other high-value target) and to gather information and notify defenders regarding any attempt to access the honeypot by unauthorized users.

EP 3340567 discloses a method for generating a model of propagation patterns in monitored sensor-based systems for identifying such propagation patterns. Metadata concerning monitored cyber-attacks is obtained and portions of attacks from the metadata are contextually filtered, for reaching a desirable set of attacks for modeling. Then sessions and sequences of attacks, as well as a propagation graph, representing the propagation of attacks across the network, are created. The propagation graph is analyzed for identifying attacker behavior and a model of the analysis is then stored in a memory. However, the data that is analyzed is entirely data that is gathered from the honeypot servers. The analysis which is performed on keywords is limited to key words which appear in the attack messages.

US 2020/374298 discloses a system for malware detection and mitigation, which detects and defends against malware in-flight regardless of the specific nature and methodology of the underlying attack. The analytic server learns the system's normal behavior during testing and evaluation phase and trains a machine-learning model based on the normal behavior. The analytic server monitors the system behavior during runtime comprising the runtime behavior of each sub-system of the system. The analytic server executes the machine-learning model and compares the system runtime behavior with the normal behavior to identify anomalous behavior. The analytic server executes one or more mitigation instructions to mitigate malware.

Based on multiple available options for mitigating malware, the analytic server makes an intelligent decision and takes the least impactful action that have the least impact on the system to maintain mission assurance. However, this publication generally states that the CVE database is useful for identifying types of attacks that may be performed, but fails to determine which specific entries in the CVE database have been exploited.

Abbasi et al.: "Detection and classification of malicious network streams in honeynets" (Massey University, New Zealand 2013) discloses a method for automatically detecting malware variants and exploits by observing their malicious footprints over network streams by classifying known classes of malware and their variants, using supervised learning techniques, and detect novel or unknown classes using unsupervised learning techniques. An exemplar selection algorithm selects most suitable exemplars and their thresholds for any given class and a novelty detection algorithm and classification algorithm that is capable to detect, learn and classify unknown malicious streams into their respective novel classes. The similarity between malicious network streams is determined by using string and informationtheoretic metrics to evaluate the relative similarity or level of maliciousness between different categories of malicious network streams. Evaluation is made by quantifying sections of analogous information or entropy between incoming network streams and reference malicious samples. Honeynets are deployed to capture these malicious streams and create labelled datasets. Clustering and classification methods are used to cluster similar groups of streams from the datasets. However, this reference teaches classifying the data sets to determine which data streams are malicious and requires training a network based on known malicious data streams, and fails to distinguish, from among CVEs, between exploited and non-exploited entries.

EP 3336739 discloses a system for classifying sources of cyber-attacks in attacksensor systems by analyzing attack metadata, comprising at least one processor adapted to obtain metadata from data regarding attacks in the form of access operations to the system, which is monitored by one or more sensors deployed within the sensor-based system; filter portions of data from the metadata for reaching a desirable dataset for modeling; create attack sessions that aggregate the atomic attacks per each attacker; extract statistical features for a learning phase; label attack sessions with an appropriate source attack label; generate a class modeler based on the extracted features and the labels; and store the class modeler in a memory. However, this reference does not teach using any CVE data whatsoever and therefore, fails to determine which specific entries in the CVE database have been exploited.

The disadvantage of the currently available conventional methods for working with CVE lists is that it is unknown which CVEs from the list were exploited. Therefore, it is necessary to check all the CVEs in the list and extract only the exploited CVEs. These tests are performed manually by software engineers and professionals, and not automatically.

It is therefore an object of the present invention to provide an automatic computer-implemented system and method for identifying exploited CVEs using honeypots, for locating publicly known vulnerabilities in the honeypot data and alerting on the currently exploited CVEs by detecting anomalies in the honeypots.

It is another object of the present invention to provide an automatic computer-implemented system and method for identifying exploited CVEs using honeypots, to extract meaningful properties from the CVEs.

It is a further object of the present invention to provide an automatic computer-implemented system and method for identifying exploited CVEs using honeypots, without the need for human intervention.

Other objects and advantages of the invention will become apparent as the description proceeds.

### Summary of the Invention

An automatic computer-implemented method for identifying exploited CVEs using honeypots, comprising the steps of:
a) downloading and storing new published CVEs from the internet into a database server;
b) extracting properties from the stored CVEs into a structured format, using Natural Language Processing algorithms;
c) recording all incoming data traffic using one or more honeypot servers and sending the honeypot records to a central database server;
d) locating the CVE's properties in the honeypot records using Product Name, Attack Pattern, Exploited File Name and Exploited Parameter Name, and storing the records for further analysis;
e) detecting anomalies in the CVE's related records; and
f) scoring each CVE's exploitability by its anomalies status and alerting CVEs having a score higher than a predetermined value.

The honeypot servers may be Glastof honeypot servers.

In one aspect, the CVE's text follows the MITRE guidelines.

The honeypots may be low-interaction web applications that are capable of emulating thousands of vulnerabilities, for gathering data from attacks that target web applications.

The **Properties Locator** may use a simple substrings lookup for several properties and combines advanced techniques of NLP and clustering methods for other more vague CVE's properties.

An exploited CVE may be evaluated using honeypot temporal data analysis by:
- identifying a peak in scans after the CVE was published;
- identifying changes in exploitation pattern;
- identifying a peak of new different IPs trying to exploit the CVE.

In one aspect, the honeypot records are clustered, and being split into clusters of similar attack patterns.

An autoencoder may be used to learn an embedding representation on the attack pattern part of each of the honeypot requests, and apply K-Means and DBSCAN clustering methods on the embeddings.

The identification that all names referring to the same product is performed by calculating the most similar embeddings to a specific product.

An automatic system for identifying exploited CVEs using honeypots, comprising:
a) a server for downloading and storing new published CVEs from the internet into a database server;
b) a **Properties Extractor** software module which uses NLP techniques and algorithms for extracting the relevant properties from the stored CVE's text;
c) a **CVE Properties** software module which provides structured information about the exploitation of a product, with a focus on web attacks;
d) one or more honeypot web servers for recording all income traffic and sending it to a central database server;
e) a **Properties Locator** software module for locating the CVE's properties in the honeypot data records and storing those records, to be analyzed;
f) an **Anomaly Detection** software module for locating all the honeypot records that belong to a specific CVE's properties for a given CVE and detecting anomalies in the CVE's related records by applying anomaly behavior recognition methods to estimate if the CVE has been exploited; and
g) an **Alert Exploited CVE** software module for scoring each CVE's exploitability by its anomalies status, and alerting CVEs with a high score (higher than a predetermined value), using a rule-based scoring system.

The Honeypot Data may be a web server of stored honeypots data, which consists of data that appears to be a legitimate part of the site, but is isolated and monitored, and that seems to contain information or a resource of value to attackers.

### Brief Description of the Drawings

The above and other characteristics and advantages of the invention will be better understood through the following illustrative and non-limitative detailed description of preferred embodiments thereof, with reference to the appended drawings, wherein:

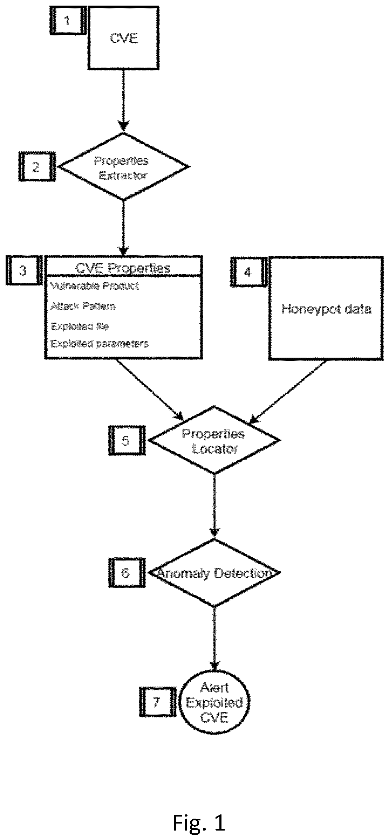

- Fig. 1 is a block diagram of the system and method proposed by the present invention parts and components, according to an embodiment of the present invention.

### Detailed Description of the Invention

The present invention provides an automatic computer-implemented system and method for identifying exploited CVEs using honeypots. The proposed method recognizes new exploited CVEs and updates the existing exploited CVEs list according to the newly recognized CVEs. The proposed method automatically extracts the relevant properties from the CVE text, and locates these properties in the honeypot data. When a CVE gets published, the method proposed by the present invention finds anomalies in the honeypot data relate to these CVEs and alerts on actually exploited CVEs.

Fig. 1 is a block diagram of the system and method proposed by the present invention parts and components, according to an embodiment of the present invention. The system includes a relevant CVE dataset 1 out of the publicly available database, which stores the newly published CVEs from the internet into a database server.

The Properties Extractor 2 is a software module which uses NLP techniques to extract the relevant properties from the CVE's text. The CVE's text is usually following the MITRE guidelines (which are guidelines for designing user interface software, the MITRE Corporation, Bedford, Massachusetts, U.S.A.) but not always, due to the huge amount of people that contribute to the CVE databases. For a human, it is easy to extract the relevant properties from the CVE, but for a computer program, it is a more complicated task. Some similar properties can be located in different locations in the CVE text, some can be referred to with multiple names, and some are concepts abbreviations. These are the reasons that the CVEs are usually used for manual exploration by security researchers. Due to the rapid developments in Natural Language Processing (NLP - a subfield of artificial intelligence concerned with the interactions between computers and human language, in particular how to program computers to process and analyze large amounts of natural language data. The goal is a computer capable of "understanding" the contents of documents, including the contextual nuances of the language within them), which is the technical form that relates to all software techniques related to text analysis, it is possible to build powerful models that can process text and extract information from the text.

The method proposed by the present invention uses NLP techniques to build a model that learns where the relevant properties are located in the CVE's text, and extracts them into a structured format.

**The CVE Properties module** 3 is a software module which provides structured information about the exploitation of a computerized device (which may be any computerized product), with a focus on web attacks. The relevant CVE's properties for the method are: Product Name (for example, the IP address), Attack Pattern, Exploited File Name and Exploited Parameter Name.

Product Name - is used to understand what product is being attacked. Knowing the product name, it is possible to locate its relevant records in the honeypot data and investigate only them.

Attack Pattern - Attack patterns are descriptions of common methods for exploiting software, in order to understand how the product is being exploited. There are many ways to compromise a product using different attack patterns.

Exploited File Name - this is the exploit entrance point represented by the source file where the attacker finds a parameter to abuse.

Exploited Parameter Name - this is the actual parameter that is being abused (for example, URL parameters, which are a way to structure additional information for a given URL). Query parameters are primarily used to specify and sort content on a web page, but they're also often used for traffic tracking). By inserting specific values to this parameter, the attacker can achieve his goal: to retrieve information, sabotage the service, apply denial of service, etc.

**Honeypot Data Server** 4 is a web server of honeypots data. Generally, a honeypot consists of data (for example, in a network site) that appears to be a legitimate part of the site, but is actually isolated and monitored, and that seems to contain information or a resource of value to attackers. The method proposed by the present invention uses data recorded by web-based honeypots that pretend to be web servers. The honeypots are low-interaction web applications, capable of emulating thousands of vulnerabilities to gather data from attacks that target web applications. The principle is to reply to the attack, using the response the attacker is expecting from his attempt to exploit the web application. Low interaction honeypots, such as a Glastopf honeypot (Glastopf is a low-interaction honeypot that emulates a vulnerable web server hosting many web pages and web applications with thousands of vulnerabilities) are designed to emulate vulnerable services and potentially detect attacks without exposing the full operating system functionality.

**Properties Locator** 5 is a software module that is used to locate the CVE's properties in the honeypot data records. The Properties Locator module operates on time series data by using simple substrings lookup for some of the properties, as well as combining more advanced techniques of NLP and clustering for other, more vague, CVE's properties. This task requires many advanced algorithms with the following challenges:
The properties listed above are not always available, since it is not guaranteed that all of them exist in the CVE. The existing properties may not appear in the honeypot records by their name. For example, a product named Content Management System can appear in the honeypot recorder as "cms". Another example, an attack pattern SQL Injection (SQL injection is a code injection technique used to attack data-driven applications, in which malicious SQL statements are inserted into an entry field for execution, e.g., to dump the database contents to the attacker, that appears in many different forms like "+and+1=1" or "1 UNION SELECT 1 FROM information_schema.tables". Such challenges are overcome by clustering all the honeypot records, and splitting them into clusters of similar attack patterns. An autoencoder is used to learn an embedding representation on the attack pattern part of each of the honeypot requests, and apply **K-Means** (K-Means clustering is a method of vector quantization, originally from signal processing, that is popular for cluster analysis in data mining. K-means clustering aims to partition n observations into k clusters in which each observation belongs to the cluster with the nearest mean, serving as a prototype of the cluster) and **DBSCAN** (Density-Based Spatial Clustering of Applications with Noise- DBSCAN- is a density-based non-parametric data clustering algorithm: given a set of points in some space, it groups together points that are closely packed together (points with many nearby neighbors), marking as outliers points that lie alone in low-density regions (whose nearest neighbors are too far away)) clustering methods on the embeddings (an embedding is a mapping of a discrete categorical variable to a vector of continuous numbers. In the context of neural networks, embeddings are low-dimensional, learned continuous vector representations of discrete variables. Neural network embeddings are useful because they can reduce the dimensionality of categorical variables and meaningfully represent categories in the transformed space). The attack pattern part of a request will be all the charters to the right of the '?' charter a URL request. For example: For a given URL request-"/folder1/folder2/file.txt?param1=val1" the attack pattern will be "param1=val". In addition, word2vec (Word2vec is a neural networkbased model that is used to produce word embeddings (the representation of words for text analysis, typically in the form of a real-valued vector that encodes the meaning of the word such that the words that are closer in the vector space are expected to be similar in meaning). This model is a shallow, two-layer neural network that is trained to reconstruct linguistic contexts of words. Word2vec takes as its input a large corpus of text and produces a vector space, typically of several hundred dimensions, with each unique word in the corpus being assigned a corresponding vector in the space. Word vectors are positioned in the vector space such that words that share common contexts in the corpus are located close to one another in the space) is being applied on each honeypot record for extracting an embedding representation for each record, thereby helping identifying similar products with different names. For example, products called "phpmyadmin" and "php_my_admin" and "pma" are typically referring to the same service. The proposed method is able to identify that all these names refer to the same product by calculating the most similar embeddings to a specific product. The exploited file and parameter usually appear as they are in the honeypot data (choosing the most suitable parameters for the model is a necessary part of the model training. There are two important parameters in random forest algorithm which will determine the accuracy of the model. One is "n_estimators." Another is "max_depth." "n_estimators" is the number of decision trees and "max_depth" is the maximum allowable depth for each tree. If "n_estimators" is too big, the result may be overfitting. However, if "n_estimators" is too small, the result may be underfitting. So, a suitable value of "n_estimators" is important for the predicted accuracy of the final model.).

**Anomaly Detection module** 6 is a software module that is used for locating all the honeypot records that belong to this specific CVE's properties for a given CVE, using anomaly detection methods (to locate trends in the honeypot records and relevant for each CVE). Then, it applies anomaly behavior recognition methods to estimate if the CVE has been exploited. There are several ways to evaluate an exploited CVE using honeypot temporal data analysis. One is by seeing a peak in scans after the CVE was published, the second is by seeing changes in exploitation pattern (i.e. - all previous requests for this service were Cross-site scripting and now changed to SQL injection), and the third is by seeing a peak of new different IPs trying to exploit this CVE.

**Alert Exploited CVE module** 7 is a software module which scores all the anomalies that are related to the CVE and alerts on exploited ones. An expert analyst can give a score for each of these anomalies (and identify even more cases) and the system alerts on the CVEs with the highest scores (CVEs with in-the-wild exploitation - in-the-wild threats are threats spreading among real world computers).

All the honeypot records are clustered and split into clusters of similar attack patterns, for overcoming the challenges that the properties are not always available. It is not guaranteed that all of them exist in the CVE and the existing properties may not appear in the honeypot records by their name.

The above examples and description have of course been provided only for the purpose of illustration, and are not intended to limit the invention in any way. As will be appreciated by the skilled person, the invention can be carried out in a great variety of ways, employing more than one technique from those described above, all without exceeding the scope of the invention.

## Claims

1. An automatic computer-implemented method for identifying exploited CVEs using honeypots, comprising:
a) downloading and storing new published CVEs from the internet into a database server;
b) extracting properties from the stored CVEs into a structured format, using Natural Language Processing for extracting the properties from the stored CVE's text, said properties including Product Name, Attack Pattern, Exploited File Name, and Exploited Parameter Name;
c) recording all incoming data traffic using one or more honeypot servers and sending the honeypot data traffic records to a central database server;
d) locating the extracted properties from the CVEs in said honeypot data traffic records, and storing honeypot data traffic records related to the CVEs;
e) detecting anomalies in the records related to the CVEs, by identifying a peak in scans after the CVE was published; identifying changes in the attack pattern; and identifying a peak of new different IPs trying to exploit said CVE; and and
f) scoring each CVE's exploitability by its anomalies status and alerting CVEs having a score higher than a predetermined value.

2. A method according to claim 1, wherein the honeypot servers are Glastopf honeypot servers.

3. A method according to claim 1, wherein the CVEs are comprised of text that follows the MITRE guidelines.

4. A method according to claim 1, wherein the honeypots are low-interaction web applications being capable of emulating thousands of vulnerabilities, for gathering data from attacks that target web applications.

5. A method according to claim 1, wherein the step of locating the extracted properties comprises using simple substrings lookup for CVE's properties that appear as text in the honeypot data traffic records, and combinations of NLP and clustering techniques for CVE's properties that are not searchable with simple substrings lookup.

6. A method according to claim 1, wherein the step of locating the extracted properties of attack patterns comprises clustering all the honeypot data records, wherein the data records are split into clusters having similar attack patterns.

7. A method according to claim 6, wherein an autoencoder is used to learn an embedding representation on the attack pattern part of each of the honeypot requests, and K-Means and DBSCAN clustering are applied on the embeddings.

8. A method according to claim 7, further comprising identifying all embedded names referring to the same product by calculating the most similar embeddings to a specific product.

9. An automatic system for identifying exploited CVEs using honeypots, comprising:
a) a server for downloading and storing new published CVEs from the internet into a database server;
b) a **Properties Extractor** software module which uses NLP techniques and algorithms for extracting the relevant properties from the stored CVE's text;
c) a **CVE Properties** software module which provides structured information about the exploitation of a product, with a focus on web attacks;
d) one or more honeypot web servers for recording all income traffic and sending it to a central database server;
e) a **Properties Locator** software module for locating the CVE's properties in the honeypot data records and storing those records, to be analyzed;
f) an **Anomaly Detection** software module for locating all said honeypot records that belong to a specific CVE's properties for a given CVE and detecting anomalies in the CVE's related records by applying anomaly behavior recognition methods to estimate if the CVE has been exploited, whereby a peak in scans after the CVE was published, changes in the attack pattern and a peak of new different IPs trying to exploit said CVE are identified; and
g) an **Alert Exploited CVE** software module for scoring each CVE's exploitability by its anomalies status, and alerting CVEs with a high score, using a rule-based scoring system.

10. A system according to claim 9, wherein the **Honeypot Data Server** is an isolated and monitored web server of stored honeypots data, which consists of data that appears to be a legitimate part of the site, and potentially contains information being valuable to attackers.

## Patentansprüche

1. Automatisches computerimplementiertes Verfahren zur Identifizierung von ausgenutzten bekannten Schwachstellen und Anfälligkeiten (CVE) unter Verwendung von Honeypots, umfassend:
a) Herunterladen und Speichern von neuen veröffentlichten bekannten Schwachstellen und Anfälligkeiten aus dem Internet in einem Datenbankserver;
b) Extrahieren von Eigenschaften aus den gespeicherten bekannten Schwachstellen und Anfälligkeiten in ein strukturiertes Format unter Verwendung von Verarbeitung natürlicher Sprache zum Extrahieren der Eigenschaften aus dem Text einer gespeicherten bekannten Schwachstelle und Anfälligkeit, wobei die Eigenschaften Produktbezeichnung, Angriffsmuster, Name der ausgenutzten Datei und Name des ausgenutzten Parameters umfassen;
c) Aufzeichnen des gesamten eingehenden Datenverkehrs unter Verwendung eines oder mehrerer Honeypot-Server und Senden der Honeypot-Datenverkehrsaufzeichnungen an einen zentralen Datenbankserver;
d) Auffinden der aus den bekannten Schwachstellen und Anfälligkeiten extrahierten Eigenschaften in den Honeypot-Datenverkehrsaufzeichnungen und Speichern der Honeypot-Datenverkehrsaufzeichnungen, die mit den bekannten Schwachstellen und Anfälligkeiten in Zusammenhang stehen;
e) Erkennen von Anomalien in den mit den bekannten Schwachstellen und Anfälligkeiten in Zusammenhang stehenden Aufzeichnungen durch Identifizieren eines Peaks in Abtastungen nach der Veröffentlichung der bekannten Schwachstelle und Anfälligkeit; Identifizieren von Änderungen im Angriffsmuster; und Identifizieren eines Peaks neuer unterschiedlicher IPs, die versuchen, die bekannte Schwachstelle und Anfälligkeit auszunutzen;
und
f) Bewerten der Ausnutzbarkeit jeder bekannten Schwachstelle und Anfälligkeit anhand ihres Anomaliestatus und Aufmerksammachen auf bekannte Schwachstellen und Anfälligkeiten mit einer Wertung über einem vorgegebenen Wert.

2. Verfahren nach Anspruch 1, wobei die Honeypot-Server Glastopf-Honeypot-Server sind.

3. Verfahren nach Anspruch 1, wobei die bekannten Schwachstellen und Anfälligkeiten aus Text bestehen, der den MITRE-Richtlinien entspricht.

4. Verfahren nach Anspruch 1, wobei die Honeypots Webanwendungen mit geringer Interaktion sind, die in der Lage sind, Tausende von Schwachstellen zu emulieren, um Daten von Angriffen zu sammeln, die auf Webanwendungen abzielen.

5. Verfahren nach Anspruch 1, wobei der Schritt des Auffindens der extrahierten Eigenschaften das Verwenden einer einfachen Teilstringsuche für Eigenschaften einer bekannten Schwachstelle und Anfälligkeit, die als Text in den Honeypot-Datenverkehrsaufzeichnungen erscheinen, und Kombinationen von NLP- und Clustering-Verfahren für Eigenschaften einer bekannten Schwachstelle und Anfälligkeit umfasst, die nicht mit einer einfachen Teilstringsuche gesucht werden können.

6. Verfahren nach Anspruch 1, wobei der Schritt des Auffindens der extrahierten Eigenschaften von Angriffsmustern das Clustern aller Honeypot-Datensätze umfasst, wobei die Datensätze in Cluster mit ähnlichen Angriffsmustern aufgeteilt werden.

7. Verfahren nach Anspruch 6, wobei ein Autoencoder zum Erlernen einer Einbettungsdarstellung an dem Angriffsmusterteil jeder der Honeypot-Anfragen verwendet wird und k-means- und DBSCAN-Clustering auf die Einbettungen angewendet werden.

8. Verfahren nach Anspruch 7, ferner umfassend das Identifizieren aller eingebetteten Namen, die sich auf dasselbe Produkt beziehen, durch Berechnen der Einbettungen, die einem bestimmten Produkt am ähnlichsten sind.

9. Automatisches System zur Identifizierung von ausgenutzten bekannten Schwachstellen und Anfälligkeiten unter Verwendung von Honeypots, umfassend:
a) einen Server zum Herunterladen und Speichern von neuen veröffentlichten bekannten Schwachstellen und Anfälligkeiten aus dem Internet in einem Datenbankserver;
b) ein Eigenschaften-Extraktor-Softwaremodul, das NLP-Verfahren und - Algorithmen zum Extrahieren der relevanten Eigenschaften aus dem Text einer gespeicherten bekannten Schwachstelle und Anfälligkeit verwendet;
c) ein CVE-Eigenschaften-Softwaremodul, das strukturierte Informationen über die Ausnutzung eines Produkts mit einem Fokus auf Web-Angriffen bereitstellt;
d) einen oder mehr Honeypot-Webserver zum Aufzeichnen des gesamten eingehenden Verkehrs und zum Senden desselben an einen zentralen Datenbankserver;
e) ein Eigenschaften-Auffinder-Softwaremodul zum Auffinden der Eigenschaften einer bekannten Schwachstelle und Anfälligkeit in den Honeypot-Datensätzen und zum Speichern dieser zu analysierenden Datensätze;
f) ein Anomalieerkennung-Softwaremodul zum Auffinden aller Honeypot-Datensätze, die zu Eigenschaften einer bestimmten bekannten Schwachstelle und Anfälligkeit gehören, für eine gegebene bekannte Schwachstelle und Anfälligkeit und Erkennen von Anomalien in den mit der bekannten Schwachstelle und Anfälligkeit in Zusammenhang stehenden Datensätzen durch Anwenden von Verhaltenserkennungsverfahren, um zu beurteilen, ob die bekannte Schwachstelle und Anfälligkeit ausgenutzt wurde, wobei ein Peak in Abtastungen nach der Veröffentlichung der bekannten Schwachstelle und Anfälligkeit, Änderungen im Angriffsmuster und ein Peak neuer unterschiedlicher IPs, die versuchen, die bekannte Schwachstelle und Anfälligkeit auszunutzen, identifiziert werden; und
g) ein Softwaremodul zum Aufmerksammachen auf eine ausgenutzte bekannte Schwachstelle und Anfälligkeit für die Bewertung der Ausnutzbarkeit jeder bekannten Schwachstelle und Anfälligkeit anhand ihres Anomaliestatus und zum Aufmerksammachen auf bekannte Schwachstellen und Anfälligkeiten mit einer hohen Wertung unter Verwendung eines regelbasierten Bewertungssystems.

10. System nach Anspruch 9, wobei der Honeypot-Datenserver ein isolierter und überwachter Webserver mit gespeicherten Honeypot-Daten ist, die aus Daten bestehen, die ein legitimer Teil der Site zu sein scheinen und möglicherweise für Angreifer wertvolle Informationen enthalten.

## Revendications

1. Procédé automatique mis en oeuvre par ordinateur destiné à identifier des CVE (vulnérabilités et expositions communes) exploitées à l'aide de honeypots, comprenant :
a) le téléchargement et le stockage de nouvelles CVE publiées à partir de l'internet dans un serveur de base de données ;
b) l'extraction de propriétés à partir des CVE stockées dans un format structuré, à l'aide d'un traitement du langage naturel afin d'extraire les propriétés du texte des CVE stockées, lesdites propriétés comprenant le nom de produit, le motif d'attaque, le nom de fichier exploité et le nom de paramètre exploité ;
c) l'enregistrement de tout le trafic de données entrant à l'aide d'un ou de plusieurs serveurs de type honeypot et l'envoi des enregistrements de trafic de données de type honeypot à un serveur de base de données central ;
d) la localisation des propriétés extraites à partir des CVE dans lesdits enregistrements de trafic de données de type honeypot et le stockage des enregistrements de trafic de données de type honeypot associés aux CVE ;
e) la détection d'anomalies dans les enregistrements associés aux CVE, par l'identification d'un pic dans des scans après la publication de la CVE ; l'identification des changements dans le motif d'attaque ; et l'identification d'un pic de nouveaux IP différents essayant d'exploiter ladite CVE ;
et
f) l'évaluation de l'exploitabilité de chaque CVE par son état d'anomalie et l'alerte sur des CVE présentant un score supérieur à une valeur prédéterminée.

2. Procédé selon la revendication 1, les serveurs de type honeypot étant des serveurs de type honeypot de Glastopf.

3. Procédé selon la revendication 1, les CVE étant composées d'un texte qui suit les directives MITRE.

4. Procédé selon la revendication 1, les honeypots étant des applications Web à faible interaction en mesure d'émuler des milliers de vulnérabilités, en vue de collecter des données à partir d'attaques qui ciblent des applications Web.

5. Procédé selon la revendication 1, l'étape de localisation des propriétés extraites comprenant l'utilisation d'une simple recherche de sous-chaînes pour des propriétés de CVE qui apparaissent comme un texte dans les enregistrements de trafic de données de type honeypot et des combinaisons de techniques de NLP et de regroupement pour des propriétés de CVE qui ne sont pas consultables par une simple recherche de sous-chaînes.

6. Procédé selon la revendication 1, l'étape de localisation des propriétés extraites de motifs d'attaque comprenant le regroupement de tous les enregistrements de données de type honeypot, les enregistrements de données étant divisés en groupes présentant des motifs d'attaque similaires.

7. Procédé selon la revendication 6, un auto-encodeur étant utilisé pour apprendre une représentation d'intégration sur la partie de motif d'attaque de chacune des requêtes de type honeypot, et des K-moyennes et un regroupement DBSCAN étant appliqués sur les intégrations.

8. Procédé selon la revendication 7, comprenant en outre l'identification de tous les noms intégrés se référant au même produit par calcul des intégrations les plus similaires à un produit spécifique.

9. Système automatique destiné à identifier des CVE exploitées à l'aide de honeypots, comprenant :
a) un serveur de téléchargement et de stockage de nouvelles CVE publiées à partir de l'internet dans un serveur de base de données ;
b) un module logiciel d'extraction de propriétés qui utilise des techniques NLP et des algorithmes, destiné à extraire les propriétés pertinentes du texte de CVE stockées ;
c) un module logiciel de propriétés de CVE qui fournit des informations structurées concernant l'exploitation d'un produit, avec une focalisation sur des attaques Web ;
d) un ou plusieurs serveurs Web de type honeypot destiné(s) à enregistrer tout le trafic entrant et à l'envoyer à un serveur de base de données central ;
e) un module logiciel de localisation de propriétés destiné à localiser les propriétés de CVE dans les enregistrements de données de type honeypot et à stocker ces enregistrements, à analyser ;
f) un module logiciel de détection d'anomalies destiné à localiser tous lesdits enregistrements de type honeypot qui appartiennent à des propriétés spécifique de CVE pour une CVE donnée et à détecter des anomalies dans les enregistrements associés à la CVE par application des procédés de reconnaissance de comportement d'anomalies afin d'estimer si la CVE a été exploitée, moyennant quoi un pic dans des scans après la publication de la CVE, des changements dans le motif d'attaque et un pic de nouveaux IP différents essayant d'exploiter ladite CVE sont identifiés ; et
g) un module logiciel d'alerte de CVE exploitée destiné à évaluer chaque exploitabilité de CVE par son état d'anomalies et à alerter sur des CVE présentant un score élevé, à l'aide d'un système d'évaluation basé sur des règles.

10. Système selon la revendication 9, le serveur de données de type honeypot étant un serveur Web isolé et surveillé de données de type honeypot stockées, qui sont constituées de données qui semblent être une partie légitime du site et qui contiennent potentiellement des informations utiles aux attaquants.
